Europäisches Patentamt

European Patent Office

Office européen des brevets

(11) Veröffentlichungsnummer: **0 464 303 A2**

# EUROPÄISCHE PATENTANMELDUNG

(21) Anmeldenummer: **91101036.1**

(51) Int. Cl.⁵: **G01K 7/02**, G01K 7/16

(22) Anmeldetag: **28.01.91**

(30) Priorität: **25.06.90 DE 4020167**

(43) Veröffentlichungstag der Anmeldung:
**08.01.92 Patentblatt 92/02**

(84) Benannte Vertragsstaaten:
**AT DE FR GB IT NL SE**

(71) Anmelder: **Heraeus Sensor GmbH**
**Heraeusstrasse 12-14**
**W-6450 Hanau am Main(DE)**

(72) Erfinder: **Wienand, Karlheinz, Dr.**
**Mudweg 4**
**W-8750 Aschaffenburg(DE)**
Erfinder: **Kempf, Kurt**
**Rhönstrasse 5**
**W-6463 Freigericht 3(DE)**

(74) Vertreter: **Grimm, Ekkehard**
**Heraeus Holding GmbH Zentralbereich**
**Patente und Lizenzen Heraeusstrasse12-14**
**W-6450 Hanau/Main(DE)**

(54) **Temperaturfühler mit Anschlusskontakten auf einem Klemmenblock.**

(57) Ein Temperaturfühler weist ein einseitig geschlossenes Schutzrohr auf, wobei im Bereich des geschlossenen Endes das Temperatur-Sensorelement angeordnet ist, welches über wenigstens zwei gegeneinander elektrisch isolierte Verbindungsleitungen aus dem offenen Ende des Rohres herausgeführt und dort mit den Anschlußklemmen eines Klemmenblocks verbunden ist; der Klemmenblock ist mit dem offenen Ende des Schutzrohres durch eine Befestigungsplatte und Montageplatte mechanisch fest verbunden. Die aus der Oberseite des Klemmenblocks herausragenden Anschlußkontakte sind auf ihrer Unterseite durch Nieten im Klemmenblock befestigt, wobei die Nietköpfe durch Lötverbindungen mit Kontaktfahnen verbunden sind, die ihrerseits im zentrischen Durchgang des Klemmenblocks mittels Laserschweißung an die zum Sensorelement führenden Verbindungsleitungen angeschlossen sind. Der zentrische Durchgang des Klemmenblocks sowie die Ausnehmungen im Bereich der Nietköpfe und Kontaktfahnen sind mit einer elektrisch isolierenden Kunstharz-Vergußmasse ausgegossen.

EP 0 464 303 A2

Die Erfindung betrifft einen Temperaturfühler mit einem Schutzrohr, in dem ein Sensorelement angeordnet ist, das über wenigstens zwei gegeneinander elektrisch isolierte Verbindungsleitungen mit Anschlußkontakten eines scheibenförmigen, mit zentralem Durchgang versehenen Klemmenblocks aus elektrisch isolierendem Werkstoff elektrisch leitend verbunden ist, wobei der Klemmenblock mit einer Oberflächenseite auf einer ein offenes Ende des Schutzrohres ringförmig umfassenden Montageplatte angeordnet ist.

Aus dem DE-GM 78 00 015 ist ein Temperaturmeßgerät mit einem Widerstandsthermometer oder Thermoelement bekannt, welches ein als langgestreckter Fühler ausgebildetes Metallrohr, das an einem Ende verschlossen und an dem anderen Ende geöffnet ist, aufweist, wobei das offene Ende des Rohres mit einer Montageplatte aus Metall versehen ist. Auf der mit einer Öffnung zum Rohr versehenen Montageplatte befindet sich ein Klemmenblock aus Isoliermaterial, welcher an einer Seite der Platte mittels Schrauben befestigt ist und an seiner freien Oberfläche Klemmen aufweist. Die Verbindungsleitungen des Temperatursensors erstrecken sich durch den Klemmenblock in einer zentralen Bohrung, die im wesentlichen koaxial zu dem Rohr angeordnet ist, wobei die Verbindungsleitungen mit den Klemmen verbunden sind.

Eine weiterführende Verkabelung, beispielsweise zu einem Auswerte-Gerät, wird von außen kommend auf die gleichen Klemmen gelegt. Der Klemmenblock ist nach außen geschützt, indem diese Anordnung in einem Behältnis, dem Verschlußkopf, montiert ist. Der Klemmenblock kann aus verschiedenen Materialien, wie beispielsweise Keramik oder Kunststoff, ausgebildet sein und ist auch für den explosionsgeschützten Bereich geeignet.

Als problematisch erweist sich bei der bekannten Anordnung, daß innerhalb einer Klemme jeweils die Verbindungsleitungen zum Sensor und die weiterführenden Anschlußleitungen gemeinsam unterzubringen sind, welches bei der Montage zu erhöhter Beanspruchung der Leitungsdrähte sowie zu Verwechslungen führen kann. Weiterhin ist aufgrund der Nähe der beiden durch das Rohr und ggf. einen Kunststoff-Verschluß geführten Verbindungsleitungen aufgrund ihres geringen gegenseitigen Abstandes Funkenüberschlag sowie möglicherweise Explosionsgefahr gegeben. Bei aggressiver Umgebungsatmosphäre sind darüberhinaus die Übergänge zwischen den Verbindungsleitungen und den Leitungen des Anschlußkabels der Korrosionsgefahr ausgesetzt.

Die Erfindung stellt sich die Aufgabe, die Kontaktierung zwischen Verbindungsleitungen und Anschlußleitungen räumlich zu trennen und eine rationelle, auch in der Massenfertigung unproblematische Verbindung zwischen den Verbindungsleitungen und Kontaktklemmen herzustellen, wobei eine gegen Verwechslungen sichere und robuste Montage der Anschlußleitungen erzielt werden soll. Weiterhin soll die Verbindung explosionsgeschützt sein.

Die Aufgabe wird durch die kennzeichnenden Merkmale des Anspruchs 1 gelöst. Weitere vorteilhafte Ausgestaltungen der Erfindung sind in den Unteransprüchen angegeben.

In einer bevorzugten Ausgestaltung der Erfindung sind als Befestigungselemente Nieten eingesetzt, wobei sich die in Richtung Ausnehmung erstreckenden Nietenköpfe wenigstens im Kontaktbereich der Anschlußfahne mit elektrisch leitender Beschichtung versehen sind, um Spaltkorrosion zu vermeiden. Durchgang und Ausnehmung sind dabei mit Silikon ausgegossen. Der Thermo-Sensor befindet sich in einem einseitig geschlossenen Schutzrohr und ist im Bereich des geschlossenen Endes angeordnet.

Als vorteilhaft erweist sich einerseits die außerordentlich sichere und übersichtliche Montagemöglichkeit der Anschlußleitungen sowie die rationell zu fertigende Verbindung zum Sensorelement; weiterhin werden Explosionsschutz und einfache Handhabbarkeit gewährleistet.

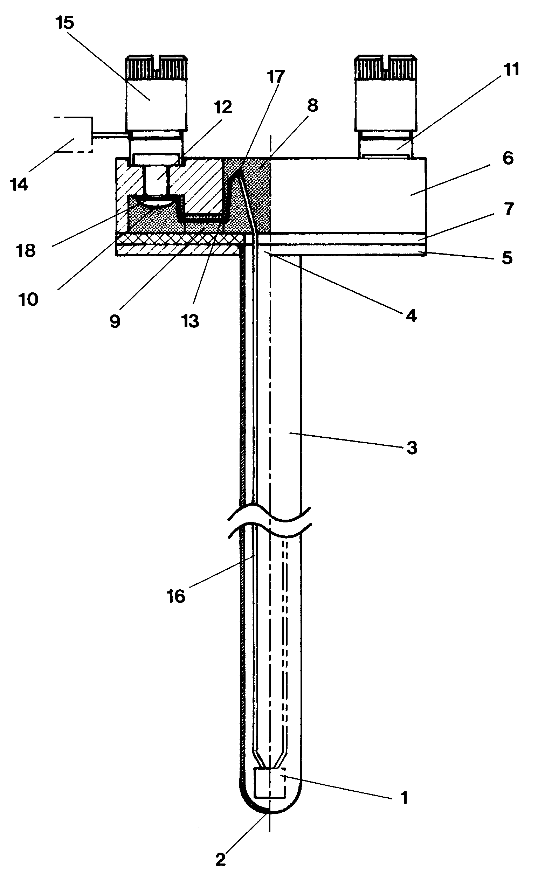

Im folgenden ist der Gegenstand der Erfindung anhand der Figur näher erläutert.

Die Figur zeigt einen Längsschnitt durch Klemmenblock und Schutzrohr.

Gemäß der Figur befindet sich der Thermosensor 1 im Bereich des geschlossenen Endes 2 eines Schutzrohres 3, das an seinem offenen Ende 4 mit einer die Öffnung ringförmig umgebenden Befestigungsplatte 5 verbunden ist. Die Befestigungsplatte 5 besteht aus dem gleichen Material wie das Schutzrohr 3 und ist an das Rohrende angeschweißt.

Auf der Befestigungsplatte 5 befindet sich ein Klemmenblock 6 aus wärmebeständigem, elektrisch isolierendem Material, welcher mit einer Montageplatte 7 versehen ist, die auf der Befestigungsplatte 5 aufliegt. Die Montageplatte 7 besteht aus einem wärmebeständigen elastischen Werkstoff, wie beispielsweise gepreßte Mineralfaser, um die bei der Montage des Klemmenblocks 6 auf die Befestigungsplatte 5 mittels Schraub- oder Nietverbindungen auftretenden Kräfte auszugleichen. Die zugehörigen Schraub- oder Nietverbindungen sind zwecks besserer Übersicht in der Figur nicht dargestellt. Sowohl der Klemmenblock 6 als auch die Montageplatte 7 weisen einen zentrischen Durchgang 8 auf; der Durchmesser des Durchgangs 8 im Klemmenblock 6 weist einen größeren Durchmesser auf als der Innendurchmesser des Schutzrohres 3, um bei der Aufnahme mehrerer Anschlußkontakte zwischen diesen genügend Abstand zu halten. Der Klemmenblock 6 ist auf seiner Unterseite mit einem kreisförmigen, umlaufenden Rand versehen, welcher mit seiner Unterkante auf der Montageplatte 7 aufliegt und eine untere von der Oberflächenseite des Klemmenblocks 6 und der Abschlußplatte 7 begrenzte Ausnehmung 9 umfaßt. In die Ausnehmung 9 ragen Nietköpfe 10 der zur Befestigung der Anschlußkontakte 11 dienenden Nieten 10, 12, wobei zwischen den Nietköpfen 10 und dem Klemmenblock 6 Kontaktfahnen 13 eingeklemmt sind, welche U-förmig gebogen sind und mit ihrem Ende in den Durchgang 8 des Klemmenblocks 6 ragen. Auf der Oberseite des Klemmenblocks 6 ragen die An- schlußkontakte 11 zur Verbindung mit äußeren Anschlußleitungen 14 heraus, welche mittels Schraubgewinde 15 festgeklemmt werden.

Die in den zentrischen Durchgang 8 des Klemmenblocks 6 ragenden Enden der Kontaktfahnen 13 sind durch Verbindungsstellen 17 mit den Verbindungsleitungen 16, welche zum Thermosensor 1 führen, verbunden. Die Verbindungsstellen 17 bestehen aus Schmelzverbindungen, vorzugsweise Laserschweißungen. Zur Verringerung des Übergangswiderstandes ist der Befestigungsbereich des Nietkopfes 10 für die Kontaktfahne 13 mit elektrisch leitender Beschichtung versehen. Zur Verhinderung von Spaltkorrosion hat es sich als besonders zweckmäßig erwiesen, die Kontaktfahne 13 mit dem Nietkopf 10 durch Lot 18 elektrisch und mechanisch fest miteinander zu verbinden.

Zum Schutz gegen Explosionsgefahr, Funkenüberschlägen und gegenüber agressiven Medien sind sowohl der Durchgang 8 als auch die Ausnehmung 9 mit Kunstharz-Vergußmasse, beispielsweise Silikon-Kautschuk, ausgegossen.

Als Werkstoff für das Schutzrohr 3 sowie die Befestigungsplatte 5 wird Edelstahl eingesetzt, während der Klemmenblock 6 aus Aluminiumoxid-Keramik besteht. Die Montageplatte 7 besteht aus gepreßter Mineralfaser mit Bindemittelzusatz. Als Thermosensor werden Thermoelemente, Meßwiderstände oder piezo-elektrische Resonatoren eingesetzt; die Verbindungsleitungen bestehen je nach Anwendungsfall aus Nickel, Platin, Kupfer, Aluminium oder deren Legierungen.

Je nach Anwendungsfall wird der aus Befestigungsplatte, Montageplatte und Klemmenblock bestehende Teil der Temperaturmeßvorrichtung in ein Schutzgehäuse eingesetzt, um die Temperaturmeßvorrichtung gegen Nässe und Feuchtigkeit zu schützen.

**Patentansprüche**

1. Temperaturfühler mit einem Schutzrohr, in dem ein Sensorelement angeordnet ist, das über wenigstens zwei gegeneinander elektrisch isolierte Verbindungsleitungen mit Anschlußkontakten eines scheibenförmigen, mit zentralem Durchgang versehenen Klemmenblocks aus elektrisch isolierendem Werkstoff elektrisch leitend verbunden ist, wobei der Klemmenblock mit einer Oberflächenseite auf einer ein offenes Ende des Schutzrohres ringförmig umfassenden Montageplatte angeordnet ist, dadurch gekennzeichnet, daß der Klemmenblock (6) um den zentralen Durchgang (8) herum auf der der Montageplatte (7) zugewandten Oberflächenseite eine Ausnehmung (9) aufweist, in der mindestens zwei, jeweils mit einer Verbindungsleitung (16) im Durchgang (8) elektrisch verbundene Kontaktfahnen (13) jeweils mit einem Befestigungselement (10, 12) elektrisch leitend und mechanisch fest verbunden sind, welches die mechanische Verankerung für einen Anschlußkontakt (11) im Klemmenblock (6) bildet und welches elektrisch leitend mit einem Anschlußkontakt (11) verbunden ist und daß mindestens die Verbindungsstelle (17) zwischen der Kontaktfahne (13) und der Verbindungsleitung (16) von einem elektrisch isolierendem Medium umschlossen ist.

2. Temperaturfühler nach Anspruch 1, dadurch gekennzeichnet, daß das elektrisch isolierende Medium den Durchgang (8) und die Ausnehmung (9) ausfüllt.

3. Temperaturfühler nach Anspruch 1 oder 2, dadurch gekennzeichnet, daß das elektrisch isolierende Medium eine Kunstharz-Vergußmasse ist.

4. Temperaturfühler nach einem der vorhergehenden Ansprüche 1 bis 3, dadurch gekennzeichnet, daß das Befestigungselement (10, 12) ein Niet ist.

5. Temperaturfühler nach Anspruch 4, dadurch gekennzeichnet, daß wenigstens der Befestigungsbereich des Nietkopfes (10) für die Kontaktfahne (13) mit elektrisch leitender Beschichtung versehen ist.

6. Temperaturfühler nach einem der vorhergehenden Ansprüche 1 bis 5, dadurch gekennzeichnet, daß die Ausnehmung (9) im Bereich des Befestigungselementes höher ist als im Durchgangsbereich.